# EUROPÄISCHE PATENTSCHRIFT

(11) **EP 3 822 656 B1**
(45) Veröffentlichungstag und Bekanntmachung des Hinweises auf die Patenterteilung: **13.03.2024**
(21) Anmeldenummer: 20214071.1
(22) Anmeldetag: 03.06.2020
(51) Int. Cl.: G01S 7/48, G01S 17/42, G01S 7/497, G01S 7/295, F16P 3/14

(54) **SENSOR**
SENSOR
CAPTEUR

(30) Priorität: 25.09.2019 DE 202019105315 U
(43) Veröffentlichungstag der Anmeldung: 19.05.2021
(62) Teilanmeldung aus: 20177946.9
(73) Patentinhaber: Leuze electronic GmbH + Co. KG, 73277 Owen/Teck (DE)
(72) Erfinder: Perchermeier, Julian, 80637 München (DE); Neumüller, Christian, 85229 Markt Indersdorf (DE); Wursthorn, Viktor, 72636 Frickenhausen (DE); Heckmayr, Alexander, 86807 Buchloe (DE); Sanzi, Friedrich, 73230 Kirchheim/Teck (DE); Feller, Bernhard, 86316 Friedberg (DE); Wendel, Simon, 73230 Kirchheim unter Teck (DE)
(74) Vertreter: Ruckh, Rainer Gerhard

(56) Entgegenhaltungen:
- DE-A1- 10 128 954
- DE-A1-102004 043 515
- US-A1- 2009 091 447
- US-A1- 2017 242 110
- US-A1- 2018 348 347

## Beschreibung

Die Erfindung betrifft einen Sensor gemäß dem Oberbegriff des Anspruchs 1.

Derartige Sensoren können als scannende Systeme ausgebildet sein, mittels derer Objekte in einem flächigen Überwachungsbereich geführt werden. Insbesondere können diese Sensoren als Flächendistanzsensoren ausgebildet sein, das heißt als distanzmessende scannende Systeme. Damit ist es möglich die Positionen von Objekten im Überwachungsbereich zu bestimmen.

Diese Sensoren können wenigstens einen Distanzsensor mit einem Sendestrahlen emittierenden Sender und einem Empfangsstrahlen empfangenden Empfänger umfassen. Weiterhin ist eine Ablenkeinheit vorgesehen, mittels derer die Sendestrahlen periodisch in einem Abtastbereich abgelenkt werden. Typischerweise führt die Ablenkeinheit eine Drehbewegung aus, durch welche die Sendestrahlen in einem in einer Ebene liegenden Abtastbereich geführt sind. Zur Positionsbestimmung von Objekten im Abtastbereich werden die aktuell mit dem Distanzsensor ermittelten Entfernungswerte sowie die aktuellen Ablenkpositionen der Sendestrahlen verwendet, die insbesondere mittels eines Winkelgebers bestimmt werden.

Diese Sensoren können für Schutzfeldüberwachungen eingesetzt werden. In diesem Fall generieren die Sensoren als Objektfeststellungssignal ein binäres Schaltsignal, das angibt ob sich ein Objekt im Schutzfeld befindet oder nicht. Typische Anwendungsbereiche derartiger Sensoren sind Gefahrenbereichsüberwachungen.

Das jeweilige Schutzfeld wird vorteilhaft applikationsspezifisch vorgegeben. Typischerweise kann ein Benutzer die Schutzfelddaten über eine Eingabeeinheit in den Sensor eingeben.

Bei Sensoren mit komplexen Optik-Aufbauten, insbesondere dann, wenn der Sender so zur Ablenkeinheit positioniert ist, dass die Strahlachse der Sendestrahlen nicht mit der Drehachse der Ablenkeinheit zusammenfällt, kann zur Auswertung der Messwerte und insbesondere zur Generierung eines Objektfeststellungssignals ein beträchtlicher Rechenaufwand erforderlich sein. Dieses Problem wird dadurch noch vergrößert, dass mit den Sensorkomponenten des Sensors in sehr kurzen Zeitintervallen viele Messwerte generiert werden, die möglichst verzögerungsfrei ausgewertet werden müssen.

Dabei ist insbesondere nachteilig, dass das Schutzfeld in einem bedienerfreundlichen Benutzerkoordinatensystem vorgegeben wird, jedoch die Messwerte nicht in diesem Benutzerkoordinatensystem vorliegen, was fortlaufende Umrechnungen der Messwerte erforderlich macht. Insbesondere können die Messwerte in zeitabhängigen Koordinatensystemen vorliegen. Dies führt zu einer weiteren Erhöhung des Rechenaufwands.

Weiterhin ist nachteilig, dass die vom Sensor generierten Messwerte mit systematischen Fehlern behaftet sein können. Derartige Messfehler können beispielsweise durch einen nicht exakten Einbau von Sensorkomponenten im Sensor bedingt sein.

Die US 2017/0242110 A1 betrifft ein optisches Sicherheitssystem mit einem optischen Sensor, der das Eindringen von Objekten in einen Überwachungsbereich überwacht. Der optische Sensor ist in Form eines scannenden Distanzsensors ausgebildet. Von dem optischen Sensor ermittelte Positionswerte eines Objekts werden mit den Abmessungen des Überwachungsbereichs verglichen. Das hierbei generierte Sensorsignal wird an eine Anzeigeeinheit gesendet.

Die US 2018/0348347 A1 betrifft einen nach einem Laufzeitverfahren arbeitenden Distanzsensor. Um die Distanzmessungen, die mit dem Distanzsensor durchgeführt wurden zu verbessern, wird ein von der Geometrie des Distanzsensors abhängiger Korrekturfaktor ermittelt. Der Korrekturfaktor kann mathematisch, durch numerisches Lösen von Gleichungssystemen oder anhand von Korrekturtabellen die Lösungen dieser Gleichungen enthalten, bestimmt werden.

Die DE 101 28 954 A1 betrifft ein Verfahren zur Bereitstellung korrigierter Daten zur Erzeugung eines Modells eines Überwachungsbereichs, der in jeweiligen Sichtbereichen von mindestens zwei optoelektronischen Sensoren, insbesondere Laserscanner, zur Bestimmung der Lage von erfassten Gegenständen liegt und Gegenstandspunkte enthält, auf der Basis von Mengen von Gegenstandspunkten in dem Überwachungsbereich entsprechenden Rohdatenelementen. Die Mengen von Rohdatenelementen sind jeweils von einem der Sensoren bei einer Abtastung seines Sichtbereichs erfasst und diesem zugeordnet. Die Mengen von Rohdatenelementen verschiedener Sensoren bilden mit einer bestimmten zeitlichen Zuordnung zueinander eine Gruppe, wobei die Rohdatenelemente der Mengen zumindest die Koordinaten von von dem zugeordneten Sensor erfassten Gegenstandspunkten jeweils in Bezug auf die Lage des erfassenden Sensors umfassen.

Zur Bildung von den Mengen von Rohdatenelementen der Gruppe entsprechenden korrigierten Mengen korrigierter Datenelemente werden für jede Menge der Gruppe die in den Rohdatenelementen enthaltenen Koordinaten unter Berücksichtigung der Relativlage der jeweiligen Sensoren in ein gemeinsames Koordinatensystem transformiert.

Die DE 10 2004 043 515 A1 beschreibt ein Verfahren zum Erfassen eines Objekts innerhalb eines Überwachungsbereichs, bei dem zumindest zwei Sensoren jeweils mindestens einen Teil des Überwachungsbereichs überwachen. Jeder Sensor erzeugt ein digitales Einzelabbild des gesamten Überwachungsbereichs, wobei die Einzelabbilder aller Sensoren in einem einheitlichen Koordinatensystem erzeugt werden. Von jedem Sensor werden diejenigen Koordinatenpunkte der Einzelabbilder als "sicher" gekennzeichnet, die er als frei von dem Objekt erkennt, wobei alle anderen Koordinatenpunkte der Einzelabbilder als "unsicher" gekennzeichnet werden. Die derart erzeugten Einzelabbilder werden jeweils zu einer Auswerteeinheit übertragen und die übertragenen Einzelabbilder werden von der Auswerteeinheit entsprechend ihren gemeinsamen Koordinatensystemen zu einem resultierenden Gesamtabbild überlagert, indem diejenigen Koordinatenpunkte des Gesamtabbilds als "sicher" gekennzeichnet werden, die zumindest in einem der von den Sensoren übertragenen Einzelabbildern als sicher gekennzeichnet sind, während alle anderen Koordinatenpunkte des Gesamtabbilds als unsicher gekennzeichnet werden. Letztlich werden die im Gesamtabbild als unsicher gekennzeichneten Koordinatenpunkte zur Bestimmung der Objektkoordinaten verwendet.

Die US 2009/0091447 A1 betrifft einen Flächendistanzsensor mit einem Laserstrahlen emittierenden Distanzsensor und einer Ablenkeinheit zur Ablenkung der Laserstrahlen.

Die Erfindung betrifft einen Sensor zur Erfassung von Objekten innerhalb eines Schutzfelds mit Sensorkomponenten zur Objekterfassung und mit einer Auswerteeinheit zur Auswertung von Messwerten der Sensorkomponenten. Die Messwerte der Sensorkomponenten liegen in einem Messkoordinatensystem vor. Das Schutzfeld ist in einem Benutzerkoordinatensystem vorgebbar. Für eine Erfassung von Objekten werden innerhalb des Schutzfelds die Messwerte der Sensorkomponenten in der Auswerteeinheit fortlaufend in das Benutzerkoordinatensystem umgerechnet. In der Auswerteeinheit wird ein Vergleich von Messwerten der Sensorkomponenten mit Schutzfelddaten des Schutzfelds in dem Benutzerkoordinatensystem durchgeführt. Bei der Transformation von Messwerten von dem Messkoordinatensystem in das Benutzerkoordinatensystem werden Messfehler korrigiert, die in einer Korrekturtabelle hinterlegt sind, welche in die Transformation der Messwerte einbezogen ist.

In diesem Fall werden die bei der Objekterfassung erhaltenen Messwerte fortlaufend in das Benutzerkoordinatensystem umgerechnet und mit dem im Benutzerkoordinatensystem vorliegenden Schutzfeld in Beziehung gesetzt um daraus das Objektfeststellungssignal zu generieren.

Messfehler können sich durch einen fehlerhaften Einbau von Komponenten des Sensors ergeben. Wird zum Beispiel der Sender versetzt zu seiner Sollposition eingebaut ergibt sich ein fehlerhafter Offset der Messwerte. Gleiches gilt, wenn zum Beispiel eine einen Winkelgeber bildende Encoderscheibe mit einem Versatz zur Solllage eingebaut wird. Auch können elektronisch vorgegebene Zeitnullpunkte für durchzuführende Distanzmessungen mit einem fehlerhaften Offset versehen sein.

Durch Einmessvorgänge können derartige Messfehler erfasst werden und mittels der Korrekturtabellen eliminiert werden.

Der Erfindung liegt die Aufgabe zugrunde einen Sensor der eingangs genannten Art bereitzustellen, welcher bei geringem konstruktivem Aufwand eine hohe Funktionalität aufweist.

Zur Lösung dieser Aufgabe sind die Merkmale des Anspruchs 1 vorgesehen. Vorteilhafte Ausführungsformen sind in den abhängigen Ansprüchen beschrieben.

Der erfindungsgemäße Sensor ist generell für eine Schutzfeldüberwachung ausgebildet. Mit einem derartigen Sensor können insbesondere Gefahrenbereiche an Maschinen oder Anlagen überwacht werden. Auch ist es möglich, den Sensor an einem Fahrzeug anzubringen, so dass innerhalb eines Schutzfelds das Vorfeld des Fahrzeugs überwacht werden kann. Für den Einsatz im Bereich der Sicherheitstechnik ist der Sensor als Sicherheitssensor ausgebildet, der einen fehlersicheren Aufbau aufweist. Der fehlersichere Aufbau wird insbesondere durch eine redundante Auswerteeinheit realisiert.

Der erfindungsgemäße Sensor ist vorteilhaft ein scannender Sensor, insbesondere ein Flächendistanzsensor.

Vorteilhaft weist der Sensor wenigstens einen Sendestrahlen emittierenden Sender, wenigstens einen Empfangsstrahlen empfangenden Empfänger und eine Ablenkeinheit zur periodischen Ablenkung der Sendestrahlen in einem Abtastbereich auf.

Durch die Ablenkeinheit werden die Sendestrahlen periodisch in einem Winkelbereich abgelenkt. Für die einzelnen Winkelpositionen werden Messwerte, insbesondere Distanzwerte generiert. Durch die Erfassung der aktuellen Winkelpositionen mit einem Winkelgeber und die ermittelten Distanzwerte können Positionen von Objekten bestimmt werden.

Prinzipiell kann der Sensor als Radarsensor oder dergleichen ausgebildet sein. Besonders vorteilhaft ist der Sensor als optischer Sensor ausgebildet.

Das Schutzfeld wird vorteilhaft für die jeweilige Applikation spezifisch vorgegeben. Auch können mehrere Schutzfelder vorgesehen sein, die vorteilhaft im Sensor abgespeichert sein können, so dass entsprechend den aktuellen Anforderungen das jeweils geeignete Schutzfeld aktiviert wird.

Die Schutzfelder werden typischerweise in einem Konfigurations- oder Einlernprozess definiert, wobei erfindungsgemäß das oder die Schutzfelder in einem Benutzerkoordinatensystem vorgegeben sind.

Beispielsweise sind das oder die Schutzfelder über eine Eingabeeinheit eingebbar.

Alternativ können das oder die Schutzfelder abhängig von Parameterwerten in der Auswerteeinheit berechnet werden.

Die Darstellung des oder der Schutzfelder in dem Benutzerkoordinatensystem ermöglicht einem Benutzer eine einfache visuelle Anzeige und auch Kontrollmöglichkeit. Eine besonders benutzerfreundliche Darstellung ergibt sich, wenn das Benutzerkoordinatensystem ein kartesisches Koordinatensystem oder ein Polarkoordinatensystem ist.

Dabei ist ein Schutzfeld generell durch Schutzfeldgrenzen definiert, die dieses Schutzfeld begrenzen. Zweckmäßig ist das oder jedes Schutzfeld im Benutzerkoordinatensystem mit äquidistanten Winkelschritten vorgegeben.

Als ein Schutzfeld kennzeichnende Schutzfelddaten liegen somit eine Vielzahl an Wertepaaren von Schutzfeldgrenzen und zugeordneten Winkelwerten vor.

Die Erfindung wird im Folgenden anhand der Zeichnungen erläutert. Es zeigen:
- Figur 1: Schematische Darstellung eines Ausführungsbeispiels des erfindungsgemäßen Sensors.
- Figur 2: Einzeldarstellung eines Schutzfelds für den erfindungsgemäßen Sensor.
- Figur 3: Ausführungsbeispiel einer Ablenkeinheit mit zwei zugeordneten Sendern für den erfindungsgemäßen Sensor.

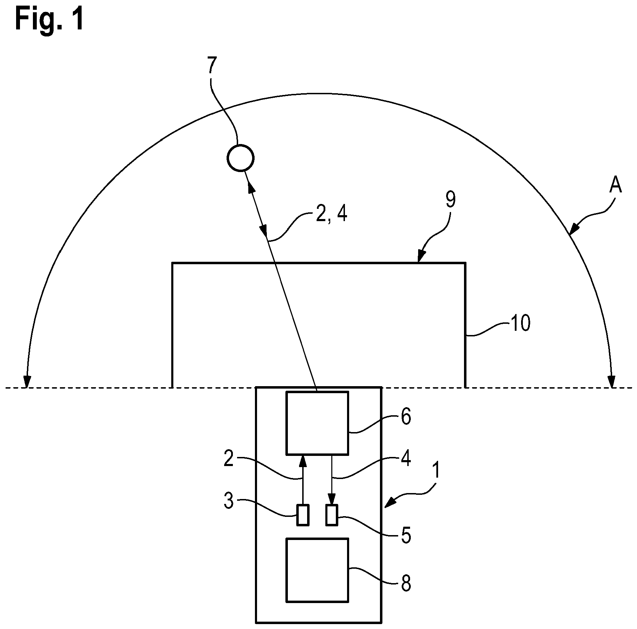

Figur 1 zeigt in einer stark schematisierten Darstellung ein Ausführungsbeispiel des erfindungsgemäßen Sensors 1. Der Sensor 1 ist generell für eine Schutzfeldüberwachung ausgebildet und kann insbesondere für Gefahrenbereichsüberwachung an Maschinen, Anlagen, Fahrzeugen und dergleichen eingesetzt werden.

Der Sensor 1 ist als scannender Sensor 1 ausgebildet, im vorliegenden Fall als Flächendistanzsensor. Prinzipiell kann der Sensor 1 als Radarsensor oder dergleichen ausgebildet sein. Im vorliegenden Fall ist der Sensor 1 als optischer Sensor 1 ausgebildet.

Der Sensor 1 gemäß Figur 1 weist Distanzsensorelemente derart auf, dass dieser im vorliegenden Fall nach einem Impuls-Laufzeit-Verfahren arbeitet. Prinzipiell können die Distanzmessungen auch nach einem Phasenmessverfahren erfolgen.

Der Sensor 1 weist im vorliegenden Fall nur ein Distanzsensorelemente mit einem Sendelichtstrahlen 2 emittierenden Sender 3 und einem Empfangslichtstrahlen 4 empfangenden Empfänger 5 auf. Generell können auch mehrere Distanzsensorelemente vorgesehen sein.

Der Sensor 1 umfasst weiterhin eine Ablenkeinheit 6 mit der die Sendelichtstrahlen 2 periodisch innerhalb eines Abtastbereichs A geführt sind, der sich im vorliegenden Fall über einen Winkelbereich von 180° erstreckt. Die Ablenkeinheit 6 kann aus einer motorisch getriebenen Drehspiegelanordnung oder dergleichen bestehen. Mittels eines nicht dargestellten Winkelgebers wird die aktuelle Ablenkposition der Ablenkeinheit 6 und damit der Sendelichtstrahlen 2 ermittelt.

Mit dem Distanzsensorelement wird die Distanz eines Objekts 7 zum Sensor 1 ermittelt, in dem die Lichtlaufzeit von pulsförmigen Sendelichtstrahlen 2 zum Objekt 7 und zurück (als Empfangslichtstrahlen 4) vom Empfänger 5 ermittelt wird. Zusammen mit der mittels des Winkelgebers ermittelten Ablenkposition der Sendelichtstrahlen 2 kann so in einer Auswerteeinheit 8 des Sensors 1 die Position des Objekts 7 ermittelt werden.

Erfindungsgemäß ist in der Auswerteeinheit 8 ein Schutzfeld 9 vorgegeben. Generell können in der Auswerteeinheit 8 auch mehrere Schutzfelder 9 vorgegeben sein, so dass je nach Anforderung an die jeweilige Applikation ein geeignetes Schutzfeld 9 aktiviert wird.

In der Auswerteeinheit 8 wird anhand der ermittelten Positionswerte geprüft, ob ein Objekt 7 im Schutzfeld 9 vorhanden ist. Dementsprechend wird in der Auswerteeinheit 8 als Objektfeststellungssignal ein binäres Schaltsignal generiert, dessen Schaltzustände angeben, ob sich ein Objekt 7 innerhalb des Schutzfelds 9 befindet oder nicht.

Der Sensor 1 kann insbesondere ein Sicherheitssensor sein, der zur Gefahrenbereichsüberwachung an einer Anlage wie einer Maschine oder einem Fahrzeug eingesetzt wird. Zur Erfüllung der hierfür geltenden Sicherheitsanforderungen weist der Sicherheitssensor einen fehlersicheren Aufbau auf. Insbesondere weist die Auswerteeinheit 8 einen redundanten Aufbau auf, beispielsweise in Form von zwei sich gegenseitig zyklisch überwachenden Recheneinheiten.

Das Schaltsignal wird an eine Steuereinheit der Anlage ausgegeben. Liegt ein gefährlicher Zustand vor, das heißt wird mit dem Schaltsignal ein Objekt 7 im Schutzfeld 9 signalisiert, überführt die Steuereinheit die Anlage in einen sicheren Zustand, wobei insbesondere die Anlage abgeschaltet wird.

Das im Sensor 1 aktivierte Schutzfeld 9 liegt in einem Benutzerkoordinatensystem vor. Dieses Benutzerkoordinatensystem unterscheidet sich zum Messkoordinatensystem des Sensors 1, dessen Ursprung zum Beispiel am Ort des Senders 3 liegt. Das Benutzerkoordinatensystem kann vorteilhaft von einem kartesischen Koordinatensystem oder einem Polarkoordinatensystem gebildet sein.

Das Schutzfeld 9 wird vorzugsweise benutzerspezifisch vorgegeben. Insbesondere kann das Schutzfeld 9 über eine nicht dargestellte Eingabeeinheit in den Sensor 1, insbesondere dessen Auswerteeinheit 8 eingegeben werden. Alternativ werden das oder die Schutzfelder 9 abhängig von Parameterwerten in der Auswerteeinheit 8 berechnet.

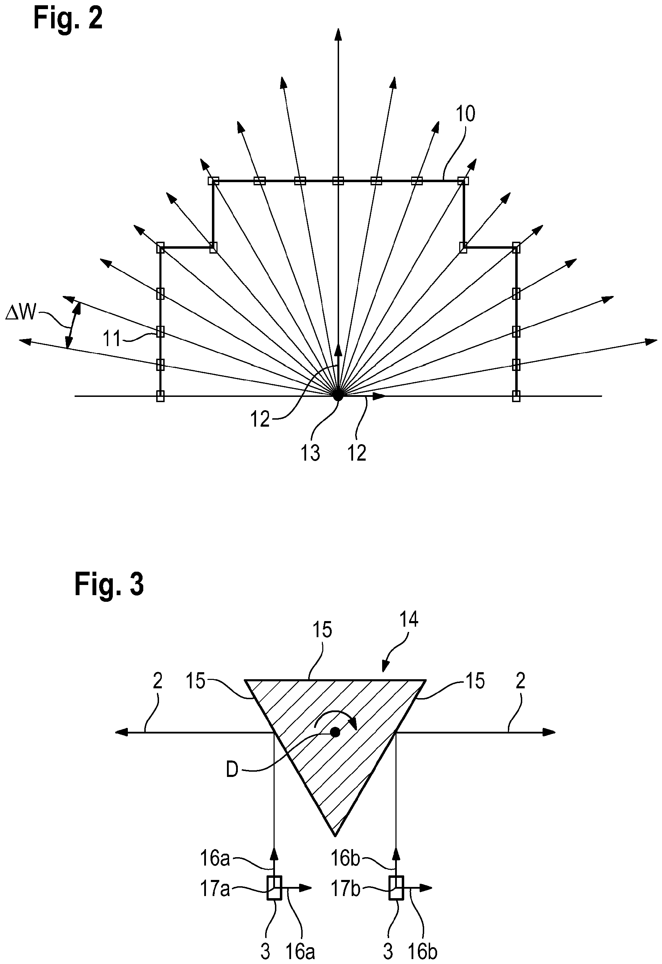

Zu Beginn des Sensorbetriebs wird in der Auswerteeinheit das Schutzfeld 9 vom Benutzerkoordinatensystem in das Messkoordinatensystem umgerechnet. Alternativ kann die Umrechnung während der Konfiguration des Sensors 1 in der Eingabeeinheit erfolgen. Damit liegen insbesondere die Schutzfeldgrenzen 10 des Schutzfelds 9 im Messkoordinatensystem vor. Damit wird der Rechenaufwand in der Auswerteeinheit 8 zur Ermittlung, ob ein Objekt 7 im Schutzfeld 9 vorhanden ist, erheblich vereinfacht. Hierzu müssen lediglich für einzelne Winkelpositionen ermittelte Distanzwerte mit dem dieser Winkelposition zugeordneten Wert 11 der Schutzfeldgrenze 10 des Schutzfelds 9 verglichen werden (Figur 2).

Vorteilhaft werden bei dem Koordinatensystem nur diskrete Werte 11 des Schutzfelds 9, insbesondere Werte 11 der Schutzfeldgrenze 10 vom Benutzerkoordinatensystem in das Messkoordinatensystem umgerechnet. Um auch im Messkoordinatensystem eine durchgehende Schutzfeldgrenze 10 zu schaffen, erfolgt eine Interpolation zwischen den diskreten Werten 11 der Schutzfeldgrenze 10.

Dies ist beispielhaft in Figur 2 dargestellt. Figur 2 zeigt ein Schutzfeld 9 im Benutzerkoordinatensystem, wobei in Figur 2 die Koordinatenachsen 12 und der Ursprung 13 des Benutzerkoordinatensystems dargestellt sind, das im vorliegenden Fall von einem kartesischen Koordinatensystem gebildet ist.

In einem äquidistanten Winkelraster ΔW sind für einzelne diskrete Winkelwerte die Werte 11 der Schutzfeldgrenze 10 definiert. Diese Werte 11 der Schutzfeldgrenze 10 werden von dem Benutzerkoordinatensystem in das Messkoordinatensystem umgerechnet, wobei dort möglicherweise die Werte 11 nicht mehr in äquidistanten Winkelschritten vorliegen.

Weiterhin können bei einer Transformation von Messwerten von dem wenigstens einen Messkoordinatensystem in das Benutzerkoordinatensystem Messfehler korrigiert werden.

Hierzu sind Messfehler in wenigstens einer Korrekturtabelle hinterlegt, welche in die Transformation der Messwerte von dem wenigstens einen Messkoordinatensystem in das Benutzerkoordinatensystem einbezogen ist.

Figur 3 zeigt eine Variante der optoelektronischen Komponenten für den Sensor 1 gemäß Figur 1.

Bei der Ausführungsform gemäß Figur 3 ist als Ablenkeinheit 6 ein um eine Drehachse D rotierender Polygonspiegel 14 mit drei Spiegelflächen 15 vorgesehen.

Der Sensor 1 weist im vorliegenden Fall zwei Distanzsensorelemente auf, von denen lediglich die Sender 3 dargestellt sind. Die Sender 3 sind der Ablenkeinheit 6 so zugeordnet, dass die Sendelichtstrahlen 2 der Sender 3 an benachbarten Spiegelflächen 15 umgelenkt werden. Durch die Drehbewegung der Ablenkeinheit 6 werden die Sendelichtstrahlen 2 periodisch jeweils in einem Abtastbereich A geführt.

Im vorliegenden Fall sind zwei Messkoordinatensysteme vorgesehen, wobei jedem Sender 3 ein Messkoordinatensystem zugeordnet ist. In Figur 3 sind die Koordinatenachsen 16a, b und die Ursprünge 17 a, b dieser Messkoordinatensysteme dargestellt.

In diesem Fall wird vor Aufnahme des Sensorbetriebs das aktivierte Schutzfeld 9 aus dem Benutzerkoordinatensystem in die beiden Messkoordinatensysteme umgerechnet, so dass zur Objektdetektion innerhalb jedes Messkoordinatensystems für eine Winkelposition ermittelt wird, ob ein erfasster Distanzwert innerhalb der Schutzfeldgrenze 10 liegt.

### Bezugszeichenliste

- (1): Sensor
- (2): Sendelichtstrahl
- (3): Sender
- (4): Empfangslichtstrahl
- (5): Empfänger
- (6): Ablenkeinheit
- (7): Objekt
- (8): Auswerteeinheit
- (9): Schutzfeld
- (10): Schutzfeldgrenze
- (11): Wert
- (12): Koordinatenachse
- (13): Ursprung
- (14): Polygonspiegel
- (15): Spiegelfläche
- (16a,b): Koordinatenachse
- (17a,b): Ursprung
- (A): Abtastbereich
- (D): Drehachse
- (ΔW): Winkelraster

## Patentansprüche

1. Sensor (1) zur Erfassung von Objekten (7) innerhalb eines Schutzfelds (9) mit Sensorkomponenten zur Objekterfassung und mit einer Auswerteeinheit (8) zur Auswertung von Messwerten der Sensorkomponenten, wobei die Messwerte der Sensorkomponenten in einem Messkoordinatensystem vorliegen, und das Schutzfeld (9) in einem Benutzerkoordinatensystem vorgegeben ist und für eine Erfassung von Objekten (7) innerhalb des Schutzfelds (9) die Messwerte der Sensorkomponenten in der Auswerteeinheit (8) fortlaufend in das Benutzerkoordinatensystem umgerechnet werden und in der Auswerteeinheit (8) ein Vergleich von Messwerten der Sensorkomponenten mit Schutzfelddaten des Schutzfelds (9) in dem Benutzerkoordinatensystem durchgeführt wird, **dadurch gekennzeichnet dass** bei der Transformation von Messwerten von dem Messkoordinatensystem in das Benutzerkoordinatensystem Messfehler korrigiert werden, wobei Messfehler in wenigstens einer Korrekturtabelle hinterlegt sind, welche in die Transformation der Messwerte einbezogen ist.

2. Sensor (1) nach Anspruch 1, **dadurch gekennzeichnet, dass** für diesen mehrere Schutzfelder (9) vorgebbar sind.

3. Sensor (1) nach einem der Ansprüche 1 oder 2, **dadurch gekennzeichnet, dass** das oder die Schutzfelder (9) über eine Eingabeeinheit eingebbar sind oder abhängig von Parameterwerten in der Auswerteeinheit (8) berechnet werden.

4. Sensor (1) nach einem der Ansprüche 1 bis 3, **dadurch gekennzeichnet, dass** ein Schutzfeld (9) kennzeichnende Schutzfelddaten von Schutzfeldgrenzen (10) gebildet sind.

5. Sensor (1) nach einem der Ansprüche 1 bis 4, **dadurch gekennzeichnet, dass** dieser ein optischer Sensor, insbesondere ein scannender Sensor (1) oder ein Flächendistanzsensor ist.

6. Sensor (1) nach einem der Ansprüche 1 bis 5, **dadurch gekennzeichnet, dass** dieser wenigstens einen Senderstrahlen emittierenden Sender (3), wenigstens einen Empfangsstrahlen empfangenden Empfänger (5) und eine Ablenkeinheit (6) zur periodischen Ableitung der Sendestrahlen in einem Abtastbereich (A) aufweist.

7. Sensor (1) nach einem der Ansprüche 1 bis 6 **dadurch gekennzeichnet, dass** in der Auswerteeinheit (8) abhängig von Messwerten der Sensorkomponenten ein Objektfeststellungssignal generiert wird.

8. Sensor (1) nach Anspruch 7, **dadurch gekennzeichnet, dass** das Objektfeststellungssignal ein binäres Schaltsignal ist, dessen Schaltzustände angeben, ob sich ein Objekt im Schutzfeld (9) befindet oder nicht.

## Claims

1. A sensor (1) for detecting objects (7) within a protective field (9) with sensor components for object detection and with an evaluation unit (8) for evaluating measured values of the sensor components, wherein the measured values of the sensor components are present in a measurement coordinate system, and the protective field (9) is predetermined in a user coordinate system and for a detection of objects (7) within the protective field (9) the measured values of the sensor components are continuously converted in the evaluation unit (8) into the user coordinate system and a comparison of measured values of the sensor components with protective field data of the protective field (9) in the user coordinate system is carried out in the evaluation unit (8), **characterised in that** measurement errors are corrected during the transformation of measured values from the measurement coordinate system into the user coordinate system, measurement errors being stored in at least one correction table which is included in the transformation of the measured values.

2. A sensor (1) according to claim 1, **characterised in that** several protective fields (9) can be preset for this sensor.

3. A sensor (1) according to one of claims 1 or 2, **characterised in that** the protective field or fields (9) can be entered via an input unit or are calculated as a function of parameter values in the evaluation unit (8).

4. A sensor (1) according to one of claims 1 to 3, **characterised in that** protective field data characterising a protective field (9) are formed by protective field boundaries (10).

5. A sensor (1) according to one of claims 1 to 4, **characterised in that** this is an optical sensor, in particular a scanning sensor (1) or an area distance sensor.

6. A sensor (1) according to one of claims 1 to 5, **characterised in that** it has at least one transmitter (3) emitting transmitter beams, at least one receiver (5) receiving receiver beams and a deflection unit (6) for periodically deflecting the transmitter beams in a scanning range (A).

7. A sensor (1) according to one of claims 1 to 6, **characterised in that** an object detection signal is generated in the evaluation unit (8) as a function of measured values of the sensor components.

8. A sensor (1) according to claim 7, **characterised in that** the object detection signal is a binary switching signal, the switching states of which indicate whether an object is located in the protective field (9) or not.

## Revendications

1. Capteur (1) pour la détection d'objets (7) dans un champ de protection (9) avec des composants de capteur pour la détection d'objets et avec une unité d'évaluation (8) pour évaluer les valeurs mesurées des composants de capteur, dans lequel les valeurs mesurées des composants de capteur sont présentes dans un système de coordonnées de mesure, pour la détection d'objets (7) dans le champ de protection (9), les valeurs de mesure des composants du capteur sont converties en continu dans l'unité d'évaluation (8) dans le système de coordonnées de l'utilisateur et une comparaison des valeurs de mesure des composants du capteur avec les données du champ de protection (9) dans le système de coordonnées de l'utilisateur est effectuée dans l'unité d'évaluation (8), **caractérisé par le fait que** les erreurs de mesure sont corrigées pendant la transformation des valeurs mesurées du système de coordonnées de mesure dans le système de coordonnées de l'utilisateur, les erreurs de mesure étant stockées dans au moins une table de correction qui est incluse dans la transformation des valeurs mesurées.

2. Capteur (1) selon la revendication 1, **caractérisé en ce que** plusieurs champs de protection (9) peuvent être prédéfinis pour ce capteur.

3. Capteur (1) selon l'une des revendications 1 ou 2, **caractérisé en ce que** le ou les champs de protection (9) peuvent être saisis via une unité de saisie ou sont calculés en fonction de valeurs de paramètres dans l'unité d'évaluation (8).

4. Capteur (1) selon l'une des revendications 1 à 3, **caractérisé en ce que** les données du champ de protection caractérisant un champ de protection (9) sont formées par les limites du champ de protection (10).

5. Capteur (1) selon l'une des revendications 1 à 4, **caractérisé en ce qu'**il s'agit d'un capteur optique, en particulier d'un capteur à balayage (1) ou d'un capteur de distance de zone.

6. Capteur (1) selon l'une des revendications 1 à 5, **caractérisé en ce qu'**il comporte au moins un émetteur (3) émettant des faisceaux d'émission, au moins un récepteur (5) recevant des faisceaux de réception et une unité de déviation (6) pour dévier périodiquement les faisceaux d'émission dans une zone de balayage (A).

7. Capteur (1) selon l'une des revendications 1 à 6, **caractérisé en ce qu'**un signal de détection d'objet est généré dans l'unité d'évaluation (8) en fonction des valeurs mesurées des composants du capteur.

8. Capteur (1) selon la revendication 7, **caractérisé en ce que** le signal de détection d'objet est un signal de commutation binaire dont les états de commutation indiquent si un objet se trouve ou non dans le champ de protection (9).
